# EUROPEAN PATENT SPECIFICATION

(11) **EP 3 725 601 B1**
(45) Date of publication and mention of the grant of the patent: **11.05.2022**
(21) Application number: 19169733.3
(22) Date of filing: 17.04.2019
(51) Int. Cl.: B60S 1/56, G02B 27/00, G01S 13/00

(54) **SURFACE CLEANING APPARATUS, SENSOR COMPRISING A SURFACE CLEANING APPARATUS AND VEHICLE COMPRISING A SENSOR**
OBERFLÄCHENREINIGUNGSVORRICHTUNG, SENSOR MIT EINER OBERFLÄCHENREINIGUNGSVORRICHTUNG UND FAHRZEUG MIT EINEM SENSOR
APPAREIL DE NETTOYAGE DE SURFACE, CAPTEUR COMPRENANT UN APPAREIL DE NETTOYAGE DE SURFACE ET VÉHICULE COMPRENANT UN CAPTEUR

(43) Date of publication of application: 21.10.2020
(73) Proprietor: Kautex Textron GmbH & Co. KG, 53229 Bonn (DE)
(72) Inventor: Davies, Chris, Cardiff, South Wales CF15 8LS (GB); Spittle, Logan, Swansea, South Wales SA9 1HU (GB)
(74) Representative: Richly & Ritschel Patentanwälte PartG mbB

(56) References cited:
- WO-A1-2018/231070
- DE-A1- 1 755 389
- DE-A1- 3 512 109
- GB-A- 2 535 862
- US-A1- 2017 210 351

## Description

The present invention relates to a surface cleaning apparatus, a sensor comprising a surface cleaning apparatus and a vehicle comprising a sensor.

Modern vehicles, and particularly automobiles, are equipped with a variety of sensors. These include in particular optical sensors that detect other road users, road signs, obstacles or other objects.

Sensors are often part of vehicle safety equipment and provide sensitive data for a variety of vehicle functions. Among other things, sensors can help the driver to perceive other road users, such as vehicles approaching from behind and remaining hidden from the driver in the blind spot of the exterior mirror. Moreover, sensors can be used for facilitating autonomous vehicles.

Sensors are often integrated into the bumper, tailgate or radiator grille of the vehicle. These positions expose the sensors to the vehicle's environment, causing water and or dirt, debris, mud, salt spray, etc. to accumulate on the surface of a sensor. In particular, if sensors are integrated into the vehicle's bumpers or radiator grille, they are exposed to particularly heavy dirt and mud splashes or increased water deposition.

If dirt and/or water has deposited on a sensor, it is possible that its functionality may be impaired. This can also lead to an impairment of safety-relevant vehicle functions.

In the prior art, nozzles and other clear vision systems have been developed to solve this problem. Therefore, it is generally known to provide external washing systems for cleaning lenses and sensors.

For example, WO 2012/138455 A1 discloses an external lens washing system for a rear view camera.

Prior art related to such lens washing systems may for example also be taken from WO 01/68425 A1, WO 02/072274 A1, and DE 10 2010 022 163 A1.

Known solutions have the disadvantage that they can often become blocked due to freezing and/or contaminants. DE-A-3512109 shows the preamble of claim 1.

The invention is based on the task of providing the state of the art with an improvement or an alternative.

According to a first aspect of the invention, the task is solved by the features of claim 1.

The following terms are explained in more detail:

A "surface" is the outermost or uppermost layer of a physical object or space. In particular, a surface is the surface of a sensor, e. g. a lens of a sensor.

The shape of the surface can be arbitrary. In particular, it is conceivable that flat surfaces, convex surfaces as well as concave surfaces can be cleaned with the surface cleaning apparatus proposed here.

Furthermore, the projected area of the surface can also be arbitrary. In particular, it is conceivable that circular, elliptical, square or different shapes of the projected area of the surface can be cleaned with the surface cleaning apparatus.

The surface could be at least partially transparent to electromagnetic radiation to which an optical sensor is sensitive.

Preferably, the surface can be made of glass or a plastic that is essentially transparent to optical radiation.

A "sensor" is a device, module, or subsystem whose purpose is to detect events or changes in its environment and send the information to other electronics. In particular, a sensor can be an optical sensor.

An optical sensor is designed to detect optical signals. The optical sensor is preferably designed as a camera. The camera preferably exhibits a lens or a lens system by means of which the optical signals are imaged, for example, on a CCD chip.

Consequently, if the sensor is designed as a camera with one lens or with a large number of lenses, the lens or the large number of lenses are part of the sensor. A lens can also be a part of the surface of the sensor that is to be cleaned with the surface cleaning apparatus.

In addition, an optical sensor can be part of a LiDAR system exhibiting a sender and a camera. A transmitter device of the LiDAR system is preferably part of the sensor and can also be part of the surface to be cleaned by the surface cleaning apparatus.

A sensor could be a part of a vehicle vision device.

A "wiping element" is any element that can be used to wipe a surface, particularly the surface to be cleaned by the surface cleaning apparatus.

As a wiping element, any element of different shape and texture may be considered that appears suitable to reduce the contamination of a surface and/or water on a surface.

In other words, the characteristic feature of a wiping element is that it provides the ability to clean a surface of any or most types of impurities and moisture.

Furthermore, it should be specifically considered that the nature of a wiping element appears to be suitable for preventing or at least minimising wear and tearing on the surface.

A wiping element can be shaped in such a way that it extends substantially in a longitudinal direction.

It is also conceivable that a wiping element exhibits a complex shape, in particular the shape of a triangular or square star, the respective corners of such a wiping element being capable of exhibiting a predominantly longitudinal extension.

A wiping element in the form of a triangular star whose corners extend predominantly in the longitudinal direction is also referred to as a wiping element with a Y-shape.

The elasticity as well as the stiffness of a wiping element can scatter in various forms.

The selection of the optimal properties of a wiping element can depend on the shape of the surface to be cleaned, the number of support elements and the kinematics of the surface cleaning apparatus.

In particular, the arrangement of the support elements and the designated motion sequence of the wiping element are decisive for the optimal properties of a wiping element.

Wiping elements exhibiting a high elasticity and a low stiffness show the best cleaning results for a large number of conceivable embodiments.

For other conceivable embodiments, wiping elements exhibiting low elasticity and high stiffness compared to the above put forth the best cleaning results.

The relative movement between the wiping element and the surface is achieved by moving means which act directly or indirectly on the wiping element.

It is conceivable that a wiping element could be firmly clamped at one point and is moved by moving means directly or indirectly at a different point. One concrete possibility is that these two points are located at opposite ends of the surface. In such embodiments, a comparatively high elasticity of the cleaning element could be necessary for the relative movement of the wiping element in relation to the surface.

With further regard to the material characteristics of a wiping element, it is conceivable, that a material is used which exhibits low hardness and/or high elongation and/or high ultimate tensile strength and/or high elasticity and/or low stiffness and/or high ductility and/or high fatigue strength and/or high endurance limit and/or high creep resistance.

A "support element" is a connection between a wiping element and its surroundings.

A support element can be designed as a fixed bearing or as a floating bearing and thus prevent or enable movements of the wiping element in relation to its surroundings, preferably in relation to the surface to be cleaned.

According to the invention, the wiping element is guided directly through a support element.

In addition, it is conceivable that a support element can perform a relative movement with respect to the surface to be cleaned by the surface cleaning apparatus. Such relative movement between the support element and the surface can be carried out in all conceivable directions of movement, whereby the support element can also enable a movement compound from more than one directions of motion.

In particular, it is conceivable that a support element moves linearly or on a circular path.

With such a relative movement between the support element and the surface it is conceivable that the support element leads the connected wiping element in a relative movement over the surface which is to be cleaned.

In other words, a support element can guide a wiping element or a wiping element can be guided through a support element.

By "moving means" any conceivable movement element that is capable of directly or indirectly moving a wiping element and/or a support element in each case relative to the surface to be cleaned is understood. If a support element is moved directly by the moving means, it is conceivable that the wiping element is moved directly or indirectly by the moving means as well.

In other words, a moving means can affect a wiping element and/or one or more support elements.

Furthermore, it is conceivable that moving means act directly on a sensor, causing a relative movement between a sensor and a wiping element.

Moving means can be connected to a controller which is designed to control or regulate a relative movement between the wiping element and the surface.

Electric motors such as stepper motors and/or linear motors can be considered with moving means in particular.

As a variant to this, a mechanical system, such as a servomechanism, could be considered as moving means. The number of motors required can thus be reduced to an advantage.

A further variant of moving means is a drivable gimbal-mounted ball, in which the ball is connected to the wiping element and in which a movement of the ball causes a relative movement of a wiping element with respect to the surface to be cleaned.

A moving means can also have passive components. In particular, a spring should be considered which is in an active connection with the wiping element. In addition, a weight should be considered which is in an active connection with a wiping element. Thus a system is conceivable which moves the wiping element with an active component of the moving means, such as an electric motor, in a first phase of the cleaning process in one direction, whereby a spring is tensioned or a weight reaches a higher level of potential energy, and whereby the pretensioned spring or the weight moves the wiping element in a second phase of the cleaning process again in the opposite direction.

A spring is a technical component that can be deformed sufficiently elastically in practical use. In particular, a spring can be a coil spring, a wire wound in the form of a screw.

A variant of a moving means is also proposed here, where the wiping element coils on a pulley mechanism or a pulley mechanism is used to act directly and/or indirectly on the wiping element.

A "translational movement" is any movement that involves a translation in at least one spatial direction. A translational movement can also be understood as a compound movement, whereby this can also take place in more than one spatial direction.

Specifically, a surface cleaning apparatus is proposed here, which exhibits a wiping element, a first and a second support element and moving means, whereby the first support element is being adapted to guide the wiping element in a translational movement relative to the surface.

The relative movement between the wiping element and the surface is achieved by moving means acting directly or indirectly on the wiping element.

In particular, it is conceivable that the wiping element is in contact with the surface to be cleaned or can be brought into contact with the surface to be cleaned using moving means.

Among other things, it is conceivable that the second support element is designed as a fixed bearing for the wiping element, so that movements of the wiping element relative to its surroundings can be prevented at the location of the second support element as a result of forces (forces and moments) acting on the second support element.

Since it is intended that the first support element is being adapted to guide the wiping element in a translational movement relative to the surface, the following concrete unclaimed examples are conceivable in particular:
According to an unclaimed example, the first support element is directly connected to the moving means whereby the moving means are designed to move the first support element on a circular path in an almost constant radius around the second support element. Preferably the moving means are designed to move the first support element on a part of such a circular path alternating back and forth. The movement of the moving means is adapted so that the wiping element can wipe in a translational movement relative to the surface to be cleaned, so that water and dirt can be removed or reduced from the surface.

According to a second unclaimed example, the first support element is directly connected to the moving means whereby the moving means are designed to move the first support element alternately back and forth in a linear movement. Thus, the wiping element can be moved indirectly by the moving means in a wiping movement over the surface to be cleaned, so that water and dirt can be removed or reduced from the surface. In this variant, the wiping element requires a high degree of elasticity, since the kinematics described above require a change in length of the wiping element during the wiping movement over the surface to be cleaned.

According to an unclaimed example, the first support element has no active connection with the moving means. The first support element as well as the second support element are fixed in relation to the surface to be cleaned. The wiping element is directly connected to the moving means. In addition, the wiping element has a shape that allows it to act on the entire surface to be cleaned during a mono-axial translational movement, thus removing or reducing water and/or dirt from the surface.

In a first sub-variant of the above variant, the first and second support element are arranged in such a way that the wiping element can be guided through both support elements in a translational movement. In a particularly preferred embodiment, the wiping element could be in an active connection with a spring, which in turn would be in an active connection with the second support element, such that an electric motor moves the wiping element in a first phase of the cleaning process in one direction, whereby the spring is tensioned and whereby the pretensioned spring moves the wiping element in a second phase of the cleaning process again in the opposite direction.

A second unclaimed sub-variant results from the fact that the second support element, in contrast to the first sub-variant, is executed as a fixed bearing, clamping the wiping element. The wiping element needs sufficient elasticity, because the effect of the moving means leads to a translational movement of the wiping element, which is only made possible by the elastic deformation of the wiping element.

In concrete terms, further unclaimed examples are conceivable in which the second support element is also operatively connected to the moving means and can be moved relative to the surface to be cleaned so that the wiping element can perform a translational movement relative to the surface to be cleaned.

Furthermore, it is conceivable that the second support element is designed as a floating bearing and can move indirectly by the forces (forces and moments) transmitted from the wiping element to the second support element during the cleaning process.

It goes without saying that all support elements except one can also be effectively related to a passive component of the moving means, such as a spring or a weight. It is conceivable that a support element may be moved in a first phase of the cleaning process in a first direction by an active component of the moving means, in particular an electric motor, whereby a spring is tensioned and whereby the pretensioned spring moves the support element in a second phase of the cleaning process again in the opposite direction.

It is also suggested here that the wiping element is moved directly or indirectly by moving means to a parking position after use to clean the sensor, with the parking position outside the area that does not interfere with the sensor's field of view.

Current technology often become blocked due to freezing or through other means. Moreover, there is pressure to reduce or eliminate requirement to wash surfaces on the vehicle with fluid. There is also pressure to remove the need for large washer tanks causing weight of the vehicle.

Advantageously, the surface cleaning apparatus presented here adequately cleans the surface and does not contain an exposed open aperture that can become blocked. Furthermore, the suggested surface cleaning apparatus uses significantly less water or liquid solution than current technologies and therefore results in a good weight reduction and leads to better fuel consumption and electric vehicle driving range. Thus, it is more environmentally friendly and economically viable.

Moreover, the surface cleaning apparatus advantageously allows the surface of a sensor to be cleaned in a relevant area. The relevant area is to be understood as the area of the sensor surface that can interfere with the proper functioning of the sensor in case of contamination or water deposition.

It can also be advantageously achieved that the sensor could be slotted inside the overall surface cleaning apparatus thus making assembly easy for Original Equipment Manufacturers.

Preferably, the wiping element exhibits a wire.

The following terms are explained in more detail:
A "wire" is a single, usually cylindrical, flexible strand or rod of metal. Wires could be used to bear mechanical loads. In particular, a wire comes in solid core, stranded, or braided forms. Although usually circular in cross-section, a wire could exhibit the cross-section of square, hexagonal, flattened rectangular, or other cross-sections.

In an advantageous embodiment, a wire exhibits high ultimate tensile strength and low hardness.

A wire can be an advantageous component of a wiping element as it can combine the features of good flexibility, high ultimate tensile strength and low hardness which are advantageous for a surface cleaning apparatus according to the first aspect of the invention.

A preferred embodiment can be achieved if at least a part of the wiping element is made of a silicone elastomer.

It is among others conceivable that the wiping element could be made of a silicone elastomer.

The following terms are explained in more detail:
A "silicone elastomer" is understood as an elastomer composed of silicone - itself a polymer - containing silicone together with carbon, hydrogen, and oxygen. There are a variety of different silicone elastomers known. In the course of this description, the feature "silicone elastomer" is to be understood as all known types of silicone elastomers.

A silicone elastomer can lead to an advantageous component of a wiping element because it offers good chemical stability and flame retardancy, and superior resistance to heat and cold. It may also have a soft surface which will prevent or reduce the likelihood of scratches on the surface to be cleaned.

In particular, a wiping element with several layers is conceivable. An inner layer can consist of a wire and an outer layer of a silicone elastomer and/or natural rubber and/or synthetic rubber and/or urethane rubber and/or chloroprene rubber and/or nitrile rubber and/or silicone and/or silicone sponge and/or vulcanized silicone and/or fluorosilicone and/or ethylene vinyl acetate. This allows the different material properties of both materials to be combined in an advantageous way.

Optional, the wiping element is adapted to be soaked in a cleaning agent.

The following terms are explained in more detail:
"Soaking" is any wetting of a wiping element with a liquid. Thus both a non-porous and a porous wiping element can be soaked."

A "cleaning agent" is any substance which, taken on its own or diluted with water, appears suitable for cleaning a surface of any kind of dirt and/or water or for supporting the cleaning of the surface by means of a wiping element. The cleaning agent may be suitable to maintain the wiping element. In particular, it is conceivable that the wiping element is kept supple by the cleaning agent and/or that the cleaning agent is suitable for preventing or slowing down the embrittlement of the wiping element.

Cleaning agent can improve the cleaning result of the surface cleaning apparatus.

In addition, the cleaning agent can make the wiping element smoother and thus prevent scratches on the surface to be cleaned.

The cleaning agent can also lubricate the points of contact between the wiping element and the support element, which reduces the risk of damage to the wiping element and/or the surface to be cleaned.

In addition, the cleaning agent can be used as a care lotion for the wiping element, which improves the durability of the wiping element.

Preferably, the wiping element is transparent.

The following terms are explained in more detail:
"Transparent" means that electromagnetic radiation can penetrate through a material. In particular, electromagnetic radiation in the range between 380 nm and 700 nm for which a conceivable sensor is sensible. Moreover, electromagnetic radiation in the range between 700 nm and 2000 nm for which a conceivable infrared sensor is sensible. Moreover, electromagnetic radiation in the range between 100 nm and 380 nm for which a conceivable ultraviolet sensor is sensible. Thus, transparency also means that the wiping element is essentially transparent.

In other words, transparent means that the wiping element is not opaque.

It is conceivable that a wiping element exhibits a transparent polymer.

This could achieve the advantage, that the wiping element will not obscure the sensors view, even if the wiping element is not guided out of the field of view of the sensor after proper use to clean the surface.

Optional, the wiping element exhibits a transverse extension of 0.1 mm to 3 mm, preferably of 0.2 mm to 2 mm and particularly preferably of 0.3 mm to 1 mm.

The following terms are explained in more detail:
The "transverse extension" of the wiping element is essentially the expansion of the wiping element in the transverse direction to the predominant longitudinal direction of the wiping element.

It should be expressly pointed out that the above values for the transverse extension of the wiping element should not be understood as sharp limits, but rather should be able to be exceeded or fallen below on an engineering scale without leaving the described aspect of the invention. In simple terms, the values are intended to provide an indication of the size of the range proposed here for the transverse extension of the wiping element. This feature allows the transverse extension or the diameter of the wiping element to be so small, that the cleaning function of the surface cleaning apparatus is not restricted and the visibility of the sensor is advantageously not further obstructed by the wiping element.

According to the invention, the surface cleaning apparatus exhibits a third support element being adapted to support the wiping element, wherein the third support element is being adapted to guide the wiping element in a translational movement relative to the surface.

The third support element allows the design of the wiping element to be changed advantageously, so that the shape of the wiping element can be adapted more closely to the needs of the surface cleaning apparatus and/or the surface to be cleaned, thus improving the overall cleaning result.

For example, it is conceivable that the wiping element exhibits a Y-shape and that each end of such wiping element can be guided by a separate support element. In this way, a particularly advantageous kinematics for the wiping movement of the wiping element can be achieved.

According to the invention, the surface cleaning apparatus exhibits a fourth support element being adapted to support the wiping element, wherein the fourth support element is being adapted to guide the wiping element in a translational movement relative to the surface.

With the fourth support element, the kinematic possibilities for a wiping movement can be improved further.

A conceivable embodiment exhibits a wiping element with the form of a square star, whereby the respective corners of the wiping element exhibit a predominantly longitudinal extension.

Another conceivable embodiment exhibits a two-part wiping element which is used to clean the surface to be cleaned. Such two-part wiping element is guided in a way that a first and a different support element guide the first part of the wiping element and the two remaining support elements guide the second part of the wiping element. A two-part wiping element is a special form of a wiping element consisting of several parts.

According to the invention, the second support element is being adapted to guide the wiping element in a translational movement relative to the surface.

Thus, it is conceivable as a concrete variant that the surface cleaning apparatus exhibits a first and a second support element, and the two support elements are moved synchronously to each other during the cleaning of the surface by the moving means. It is also conceivable that the surface cleaning apparatus exhibits more than two support elements and that all support elements are moved synchronously to each other during the cleaning of the surface by the moving means.

Furthermore, it is conceivable that one or more support elements are moved asynchronously to each other using the moving means. In such an embodiment it may be necessary that the wiping element guided by the support elements exhibits a high elasticity.

In addition, it is conceivable that the wiping element will be connected directly to the moving means and that the support elements will be moved indirectly using the moving means. In this case, too, the support elements can be moved synchronously or asynchronously.

Preferably, the wiping element consists of several parts.

The following terms are explained in more detail:
"Several parts" means that the wiping element consists of several captive parts, which can be firmly or loosely connected with each other. In particular, several parts of a wiping element are interrelated.

In particular, it is conceivable that a wiping element consists of more than one part. These parts can be connected with each other or have a common point of contact with each other or do not touch each other.

This enables advantageous variants of a surface cleaning apparatus. In particular, a multi-part wiping element allows other variants of moving means to be made possible which are directly or indirectly connected to the wiping element.

In addition, other motion sequences of the wiping element are possible during the cleaning process, which can advantageously improve the cleaning result.

In addition, it can be advantageously achieved, that the edge areas of the surface to be cleaned can be better reached and thus cleaned by a wiping element consisting of several parts. Optional, the wiping element exhibits a first part and a second part, wherein the first part and the second part intersect each other.

A conceivable embodiment shows two or more crossed wires manufactured from a suitable material to move along the surface of the sensor and remove unwanted dirt and/or water. The wires can cross each other perpendicular to each other advantageously.

Moreover, the wires could be attached to a number of pulley-systems. By pulling the wire in one direction and extending it in the other, the assembly of wires can move across a single axis as a whole. This system allows all areas of a surface to be cleaned, particularly a camera lens, to be reached and cleaned.

Preferably, the wiping element exhibits a first part and a second part, wherein the first part and the second part exhibit a mutual twist.

The following terms are explained in more detail:
A "mutual twist" is to be understood in the sense that the first part of the wiping element and the second part of the wiping element are twisted around each other at at least one common intersection. Twisting refers to the twisting of parts of the wiping element against each other and/or the helical winding of parts of the wiping element around each other.

Because the first part and the second part exhibit a mutual twist, it is conceivable that the first part of a wiping element and the second part of a wiping element are in an active connection to each other.

In particular it is advantageously possible to transfer forces (forces and/or moments) from the first part of the wiping element to the second part of the wiping element and vice versa.

Furthermore, it is conceivable that a movement of the first part of the wiping element is transferred to a movement of the second part of the wiping element and vice versa.

The mutual twist of the first part and the second part of the wiping element enables in a particularly advantageous way that all areas of the surface to be cleaned can be easily reached by the wiping element and a particularly good cleaning result can be achieved.

A preferred embodiment can be achieved if the surface cleaning apparatus exhibits shedding means adapted to shed deposits from the wiping element.

The following terms are explained in more detail:
By "shedding means" any means which appears suitable to remove residues on the wiping element from the wiping element is meant.

These can be solid and/or liquid residues, in particular any form of contamination and/or water.

The shedding means has the advantage of preventing dirt or water deposits from reaching an area which is not intended to come into contact with dirt and/or water.

The shedding mean can be advantageously made of the material ethylene-propylene-diene rubber, especially in the area where the shedding mean is designed to come into contact with the wiping element.

Optional, the wiping element or a part of the wiping element is guided by at least one support element, and the at least one support element is adapted to clean the wiping element as it passes through the support element.

In particular, it is conceivable that a support element exhibits shedding means.

In addition, other embodiments are conceivable which can remove coarser particulate soiling and/or dissolved soiling and/or moisture from the wiping element using a support element.

The advantage is that the functions wiping element guidance and wiping element cleaning can be achieved together using a support element. In this way costs can be saved.

Preferably, the wiping element or at least one part of the wiping element is guided by at least one support element, and the at least one support element is adapted to provide cleaning agent to the wiping element as it passes through the support element.

It is conceivable that a cleaning agent can be applied to the wiping element using the support element. Such a cleaning agent for the wiping element can be water and/or a cleaning agent and/or a different liquid, which is designed to clean the wiping element.

The advantage is that the functions wiping element guidance and wiping element cleaning can be achieved together using a support element. In this way costs can be saved.

An optional embodiment can be achieved, if the wiping element being adapted to pass through a reservoir for cleaning agent during movement through the moving means.

To ensure that the wiping element is soaked with cleaning agent, the wiping element could be housed in a cleaning agent reservoir or pass through a cleaning agent reservoir during operation of the surface cleaning apparatus.

It is also conceivable that a pulley mechanism will wind up the wiping element at a point that is located within a reservoir for cleaning agent.

A reservoir for cleaning agent could be sealed by using an O-ring. Such sealing solution can be used both to seal the point of the reservoir where the wiping element is passed through the housing of the reservoir and the point where a shaft of the moving means is passed through the housing of the reservoir.

It is also conceivable that several pulley mechanisms are housed in a single reservoir with cleaning agent, as this can save costs.

Preferably, the surface cleaning apparatus is adapted to replace a segment of the wiping element being adapted to be brought into contact with the surface.

The following terms are explained in more detail:
A wiping element can show signs of wear after a certain number of uses or after a certain service life, which can impair the effectiveness of the wiping element with regard to the cleaning success of the surface to be cleaned.

"Replace a segment" means that the surface cleaning apparatus is designed to replace at least the part of the wiping element that can be brought into contact with the surface to be cleaned at the end of that specific segments life.

In concrete terms, it is conceivable that a part of the wiping element can uncoil and replace the segment that has been used. Thus, the overall systems durability can be advantageously increased.

In other words, a regenerative wiping element concept can be realized.

Optional, the moving means exhibit an electric motor.

The following terms are explained in more detail:
An "electric motor" is a drive with one or more electric motors which is controlled by a controller and/or regulated by a control system.

The electric motor can be controlled in the form of a speed, torque, position, speed or multi-variable control system, which allows advantageous embodiments to be achieved.

An electric motor is an advantage when it comes to cleaning the surface to be cleaned with particular precision and reliability. In particular, cleaning can be carried out until even stubborn dirt has been removed or at least reduced to a minimum.

Furthermore, in connection with an opaque wiping element, it is conceivable that the optical sensor is designed to image the wiping element without impairing the function of the sensor. For example, it is possible that the sensor is focused in such a way that the wiping element is only imaged out of focus and is therefore not perceived as impairing. It is also possible that the image of the wiping element on the sensor is removed or minimized by means of electronic filtering from the circumference of the other image on the sensor. In particular, the two measures described above can also be advantageously combined.

A large number of design variations according to the first aspect of the invention could be created. Varying the number of parts of the wiping element, the moving means used to move the wiping element, the housing of the wiping element and the placement of cleaning agent housings all lead to different embodiments of a surface cleaning apparatus as disclosed here.

According to a second aspect of the invention, the task is solved by a sensor comprising a surface cleaning apparatus according to the first aspect of the invention.

It is understood that the advantages of a surface cleaning apparatus for cleaning a surface of a sensor according to the first aspect of the invention, as described above, directly extend to a sensor comprising a surface cleaning apparatus according to the first aspect of the invention.

It should be noted that the subject-matter of the second aspect can be advantageously combined with the subject-matter of the first aspect of the invention, either individually or cumulatively in any combination.

According to a third aspect of the invention, the task is solved by a vehicle comprising a sensor according to the second aspect of the invention.

The advantages of a sensor comprising a surface cleaning apparatus according to the first aspect of the invention, as described above, directly extend to a vehicle featuring such sensor. In particular, the sensor, which can be reliably cleaned, allows the safety functions of the vehicle to be maintained longer even under difficult environmental conditions.

It should be noted that the subject-matter of the third aspect can be advantageously combined with the subject-matter of the preceding aspects of the invention, either individually or cumulatively in any combination.

Further advantages, details and features of the present invention are explained in the description of the following embodiments, thereby:
- figure 1:: shows a schematic view of an assembly of a surface cleaning apparatus exhibiting a wiping element guided by a first support element and a second support element, the first support element being arranged to perform a linear motion;
- figure 2:: shows a schematic view of an assembly of a surface cleaning apparatus exhibiting a wiping element guided by a first support element and a second support element, the first support element being arranged to perform a motion on a circular path;
- figure 3:: shows a schematic view of an assembly of a surface cleaning apparatus exhibiting a wiping element guided by a first support element and a second support element, the first and the second support element being arranged to perform a linear motion;
- figure 4:: shows a schematic cross-sectional view of a wiping element exhibiting two different materials;
- figure 5:: shows a schematic view of an assembly of a surface cleaning apparatus exhibiting four support elements guiding a wiping element consisting of two parts;
- figure 6:: shows a schematic top-view of an assembly of a surface cleaning apparatus exhibiting four support elements guiding a wiping element consisting of two parts, the two parts exhibiting a mutual twist;
- figure 7:: shows a schematic top-view of an assembly of a surface cleaning apparatus according to figure 6, whereby the wiping element exhibiting a different relative position to the surface to be cleaned;
- figure 8:: shows a schematic top-view of an assembly of a surface cleaning apparatus exhibiting four support elements guiding a wiping element consisting of two parts, the two parts exhibiting a mutual twist, whereby the support elements are adapted to perform a translational movement relative to the surface to be cleaned;
- figure 9:: shows a schematic top-view of a surface cleaning apparatus exhibiting four support elements guiding a wiping element consisting of two parts, whereby the support elements are executed as pulley mechanisms;
- figure 10:: shows a schematic view of a surface cleaning apparatus, which is equipped to clean a wiping element using shedding means and to apply a cleaning agent to the wiping element;
- figure 11:: shows a schematic view of a surface cleaning apparatus exhibiting moving means driven by an electric motor;
- figure 12:: shows a schematic view of an assembly of a surface cleaning apparatus according to figure 5 exhibiting a collecting sleeve; and
- figure 13:: shows a schematic top-view of a surface cleaning apparatus exhibiting four support elements guiding a wiping element consisting of two parts, whereby the support elements are executed as damping means.

In the following description same reference numerals describe same elements and same features, respectively, so that a description of one element conducted with reference to one figure is also valid for the other figures, so that repetition of the respective feature is omitted.

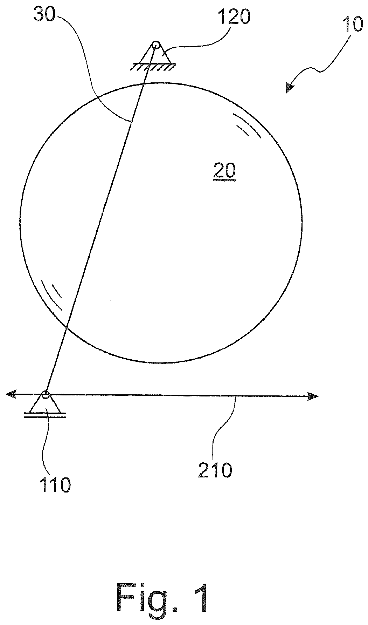

Moving means are an essential feature of a surface cleaning apparatus presented here. Figures 1 to 3, 5 to 8 and 12 schematically show a subassembly of a surface cleaning apparatus, whereby no moving means are shown. Appropriate moving means are to be added mentally, which are designed to move the respective wiping element directly or indirectly relative to the surface to be cleaned.

Figure 1 shows a schematic view of an assembly of a surface cleaning apparatus 10 exhibiting a wiping element 30 guided by a first support element 110 and a second support element 120, the first support element 110 being arranged to perform a linear translational motion 210.

The wiping element 30 is fixed to both the first support element 110 and the second support element 120.

The second support element 120 is designed as a fixed bearing.

The first support element 110 is designed as a floating bearing which allows the first support element 110 to perform a translational movement 210.

The surface 20 to be cleaned is a flat surface or a convex surface.

The assembly of the surface cleaning apparatus 10 consists of a first support element 110, a second support element 120, and a wiping element 30, whereby the wiping element 30 is in contact with the surface 20 to be cleaned or can be brought into contact with the surface 20 to be cleaned.

In addition, the surface cleaning apparatus 10 also exhibits moving means 150 (not depicted), whereby the first support element 110 is directly connected to the moving means 150 (not depicted).

The moving means 150 (not depicted) are designed to move the first support element 110 alternately back and forth in a linear translational movement 210. Thus, the wiping element 30 can be moved indirectly by the moving means 150 (not depicted) in a translational wiping movement over the surface 20 to be cleaned, so that water and dirt can be removed or reduced from the surface 20.

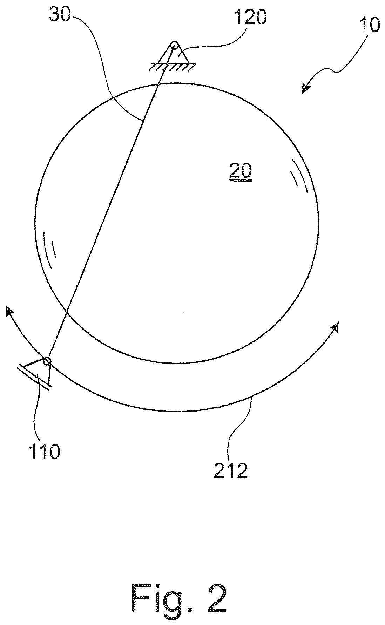

For this specific unclaimed example, the wiping element 30 requires a high degree of elasticity, since the kinematics described above require a change in length of the wiping element 30 during the wiping movement over the surface 20 to be cleaned. Figure 2 shows compared to Figure 1 a schematic view of a slightly modified unclaimed example of an assembly of a surface cleaning apparatus 10, exhibiting a wiping element 30 guided by a first support element 110 and a second support element 120, the first support element 110 being arranged to perform a translational motion 212 on a circular path.

The first support element 110 is directly connected to the moving means 150 (not depicted), whereby the moving means 150 (not depicted) are adapted to move the first support element 110 on a translational motion 212 on a circular path in an almost constant radius around the second support element 120 alternating back and forth.

The wiping element 30 is fixed to both the first support element 110 and the second support element 120.

Since the radius of the designated movement of the first support element 110 is predominantly constant and has the second support element 120 as its origin, the wiping element 30 does not need to elongate much as a result of its designated translational movement to clean the surface. Thus, the wiping element 30 does not need a comparatively high elasticity.

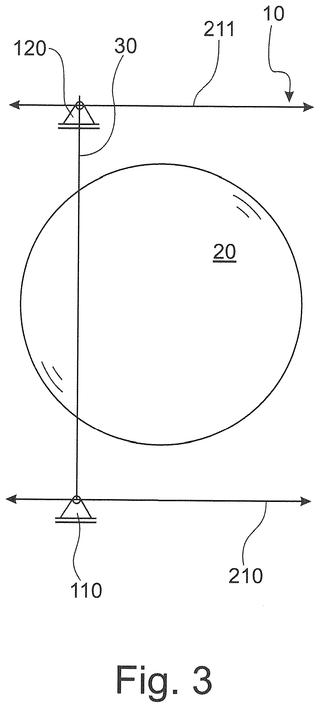

Figure 3 shows compared to Figure 1 a schematic view of a slightly modified unclaimed example of an assembly of a surface cleaning apparatus 10, exhibiting a wiping element 30 guided by a first support element 110 and a second support element 120, the first support element 110 and the second support element 120 being arranged to perform a linear translational motion 210, 211.

Both, the first support element 110 and the second support element 120 are designed as a floating bearing.

The first support element 110 is adapted to perform a linear translational movement 210.

The second support element 120 is adapted to perform a linear translational movement 211.

The surface cleaning apparatus 10 also exhibits moving means 150 (not depicted), whereby the first support element 110 and the second support element 120 are directly connected to the moving means 150 (not depicted).

The moving means 150 (not depicted) are designed to move the first support element 110 and the second support element 120 synchronously alternately back and forth in a linear translational movement 210, 211. Thus, the wiping element 30 can be moved indirectly by the moving means 150 (not depicted) in a translational wiping movement over the surface 20 to be cleaned, so that water and dirt can be removed or reduced from the surface 20.

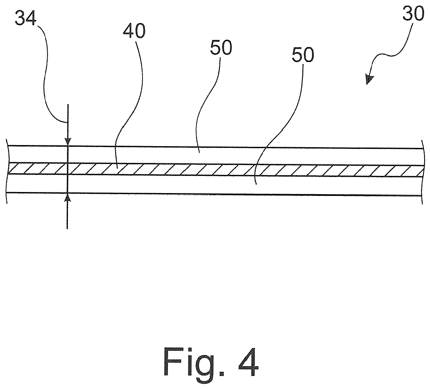

Figure 4 shows a schematic cross-sectional view of a wiping element 30 for a surface cleaning apparatus 10 (not depicted) exhibiting two different materials.

The wiping element 30 exhibits a transverse extension 34.

The core of the wiping element 30 is formed by a wire 40. This wire 40 is coated with a silicone elastomer 50.

The cross section of the wire 40 can e.g. be square, circular or elliptic.

This embodiment allows the different material properties of both materials to be combined in an advantageous way.

The wire 40 absorbs the tensile forces and the silicone elastomer 50 forms an ideal surface of a wiping element 30 so that scratches on the surface 20 (not depicted) to be cleaned can be avoided and a particularly good cleaning result can be achieved.

In addition, the silicone elastomer 50 coating is designed so that it is perfectly wetted and/or impregnated with a cleaning agent 300 (not depicted), thus maintaining the wiping element 30 and improving the cleaning result.

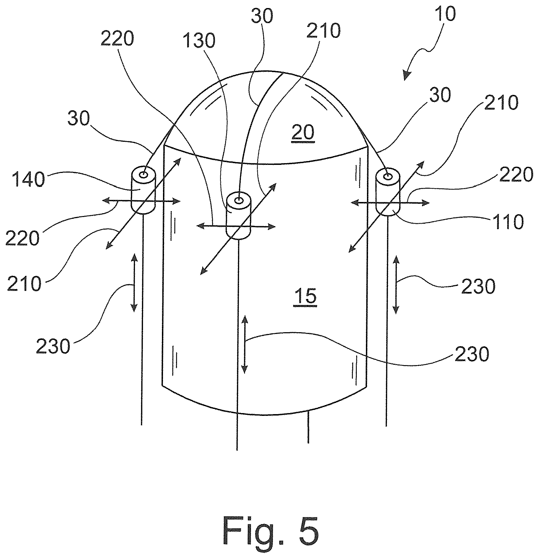

Figure 5 shows a schematic view of an assembly of a surface cleaning apparatus 10 exhibiting a first support element 110, a second support element 120 (not depicted), a third support element 130, and a fourth support element 140 guiding a wiping element 30 consisting of two parts (unmarked).

The wiping element 30 is guided in a translational movement 210, 220, 230 by the four support elements 110, 120 (not depicted), 130, 140.

In addition, the surface cleaning apparatus 10 also exhibits moving means 150 (not depicted), whereby the four support elements 110, 120 (not depicted), 130, 140 are directly connected to the moving means 150 (not depicted).

Furthermore, the wiping element 30 is directly connected to the moving means 150 (not depicted).

The four support elements 110, 120 (not depicted), 130, 140 are designed as floating bearings, which allow the four support elements 110, 120 (not depicted), 130, 140 to perform a translational movement 210, 220.

Furthermore, the four support elements 110, 120 (not depicted), 130, 140 are adapted to guide the wiping element in a translational movement 230.

A translational movement of the wiping element 30 can also be understood as a compound movement from the translational movements 210, 220, 230, whereby this can also take place in more than one spatial direction at a time.

Thus, the wiping element 30 is connected to the moving means 150 (not depicted) both indirectly and directly by means of an active connection.

The wiping element 30 of the assembly of a surface cleaning apparatus 10 is in connection to the sensors 15 convex surface 20 to be cleaned.

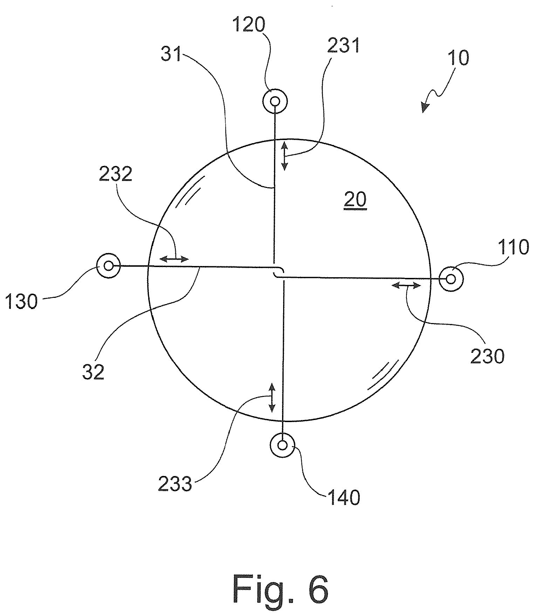

Figure 6 shows a schematic top-view of an assembly of a surface cleaning apparatus 10 exhibiting four support elements 110, 120, 130, 140 guiding a wiping element 31, 32 consisting of a first part 31 and a second part 32, the two parts 31, 32 exhibiting a mutual twist.

Due to the mutual twist, the first part of a wiping element 31 and the second part of a wiping element 32 are in an active connection to each other.

Thus, forces (forces and/or moments) are transferred from the first part of the wiping element 31 to the second part of the wiping element 32 and vice versa.

Furthermore, a movement of the first part of the wiping element 31 is transferred to a movement of the second part of the wiping element 32 and vice versa.

The first part of the wiping element 31 is guided by the first support element 110 and the second support element 120.

The second part of the wiping element 32 is guided by the third support element 130 and the fourth support element 140.

The surface cleaning apparatus 10 also exhibits moving means 150 (not depicted), whereby the wiping element 31, 32 is directly connected to the moving means 150 (not depicted).

The moving means 150 (not depicted) are designed to move the first part of the wiping element 31 and the second part of the wiping element 32 alternately back and forth in a linear translational movement 230, 231, 232, 233. Thus, the wiping element 31, 32 can be moved indirectly by the moving means 150 (not depicted) in a translational wiping movement over the surface 20 to be cleaned, so that water and dirt can be removed or reduced from the surface 20.

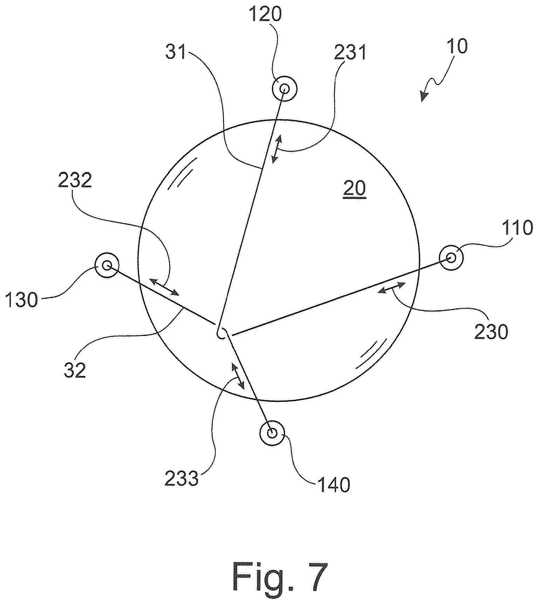

Figure 7 shows in comparison to Figure 6 with a schematic top-view of the assembly of the surface cleaning apparatus 10 a relocation of the first part of the wiping element 31 and the second part of the wiping element 32 as a result of a compound translational movement 230, 231, 232, 233 of the wiping element 31, 32.

By means of other compound translational movements 230, 231, 232, 233 of the wiping element 31, 32 other displacements of the wiping element 31, 32 can be achieved, so that the wiping element 31, 32 as a whole can perform a translational movement relative to the surface to be cleaned 20, so that water and dirt can be removed or reduced from the surface 20.

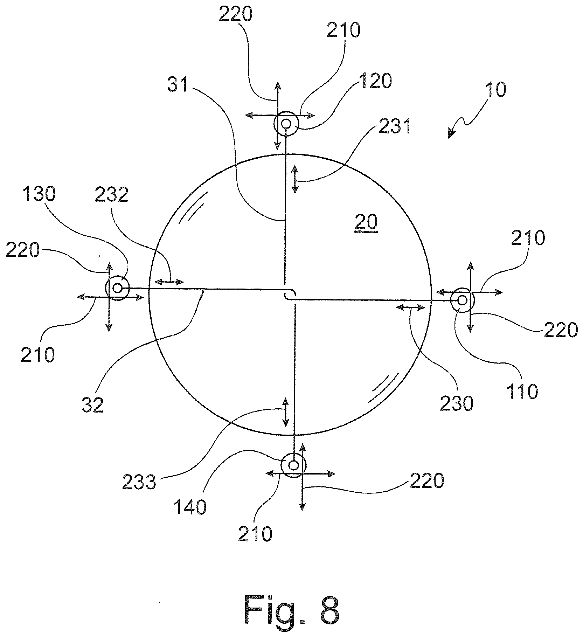

Figure 8 shows a schematic top-view of an assembly of a surface cleaning apparatus 10, which is comparable to the embodiment from Figure 6.

In contrast to Figure 6, the four support elements 110, 120, 130, 140 are also directly connected to the moving means 150 (not depicted) and are designed as floating bearings in order to carry out a translational movement 210, 220 relative to the surface to be cleaned 20.

Thus the wiping element 31, 32 is both directly and indirectly connected to the moving means 150 (not depicted) and can perform a compound translational movement relative to the surface to be cleaned 20 to clean that particular surface 20.

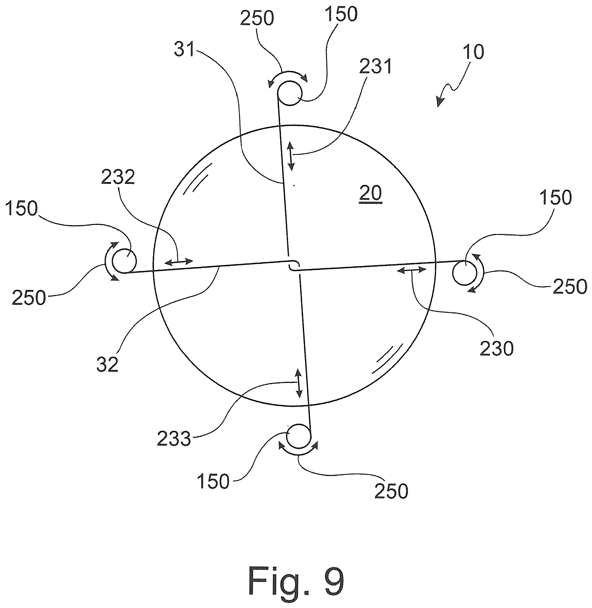

Figure 9 shows a schematic top-view of a surface cleaning apparatus 10, which is comparable to the embodiment from Figure 6, whereby the unclaimed example from Figure 9 also exhibits moving means 150, directly connected with the wiping element.

The four support elements (not marked) guiding the wiping element 31, 32 are executed as pulley mechanisms and thus as moving means 150.

This kind of moving means 150 are connected with the wiping element 31, 32 and adapted to perform a rotational movement 250. This causes the wiping element 31, 32 to perform a translational movement 230, 231, 232, 233 relative to the surface 20 to be cleaned, which can thus be cleaned.

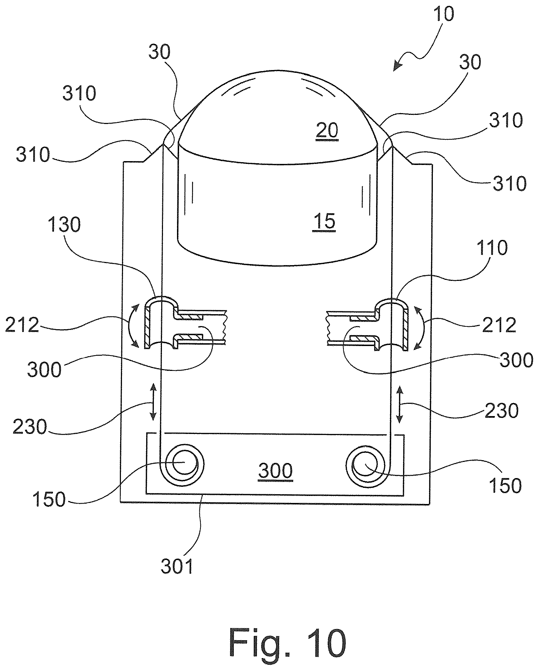

Figure 10 shows a schematic view of a surface cleaning apparatus 10 for cleaning the surface 20 of the sensor 15. The surface cleaning apparatus 10 is equipped to clean the wiping element 30 using shedding means 310 and to apply a cleaning agent 300 to the wiping element 30.

The wiping element 30 exhibits a direct connection with the moving means 150, enabling a translational movement 230 of the wiping element 30.

Furthermore, the moving means 150 are directly connected to the support elements 110, 120 (not depicted), 130, 140 (not depicted) .

The four support elements 110, 120 (not depicted), 130, 140 (not depicted) guiding the wiping element 30 are designed as floating bearings, which allow the four support elements 110, 120 (not depicted), 130, 140 (not depicted) to perform a translational movement 212, which affects the movement of the wiping element 30.

To supply the wiping element 30 with cleaning agent 300, the support elements 110, 120 (not depicted), 130, 140 (not depicted) are adapted to provide cleaning agent 300 to the wiping element 30 as it passes through the support elements 110, 120 (not depicted), 130, 140 (not depicted).

For this purpose, it is intended that the support elements 110, 120 (not depicted), 130, 140 (not depicted) are connected to a supply system (not marked) for cleaning agent 300.

Furthermore it is alternatively or additionally planned that the part of the moving means 150 intended as pulley mechanism is located in a reservoir 301 for cleaning agent 300, whereby the wiping element 30 is also supplied with cleaning agent 300.

Moreover, the surface cleaning apparatus 10 exhibits shedding means 310, which are adapted to shed deposits from the wiping element 30.

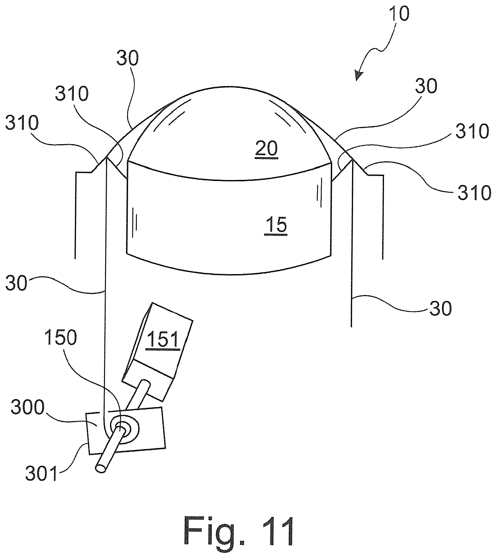

Figure 11 shows a schematic view of a surface cleaning apparatus 10 exhibiting moving means 150 driven by an electric motor 151.

Each moving means 150 exhibits a winding mechanism (not marked) located inside a reservoir 301 for cleaning agent 300.

The reservoir 301 for cleaning agent 300 is sealed by using an O-ring (not depicted).

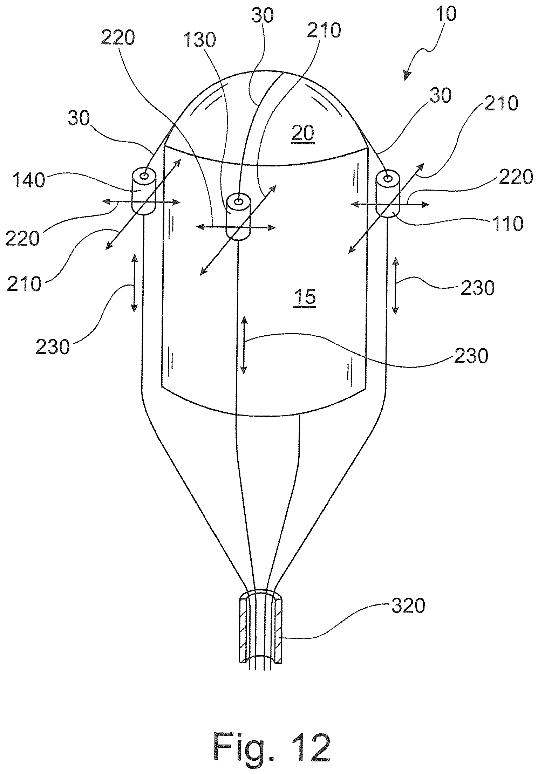

Figure 12 shows a schematic view of an assembly of a surface cleaning apparatus 10 according to the embodiment in figure 5 exhibiting a collecting sleeve 320.

The collecting sleeve 320 is adapted to guide the wiping element 30 and to reduce wear and tearing of the wiping element 30.

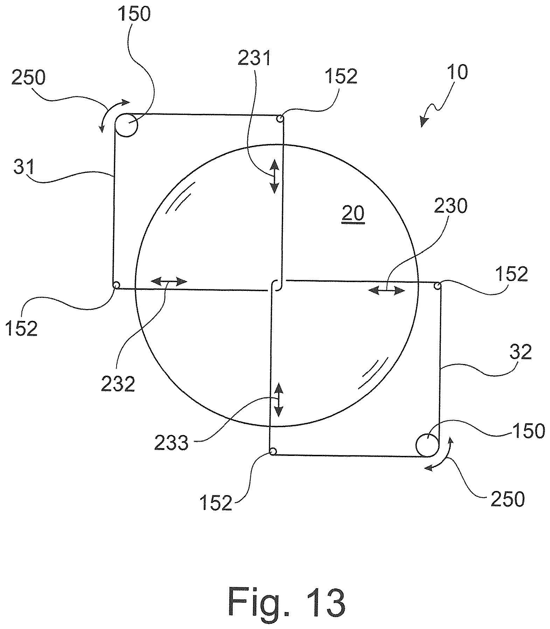

Figure 13 shows a schematic top-view of a surface cleaning apparatus 10 exhibiting four support elements (not marked) guiding a wiping element 31, 32 consisting of two parts, whereby the support elements (not marked) are executed as damping means 152.

Each part of the wiping element 31, 32 is connected to moving means 150 adapted to perform a rotational movement 250. This can cause the wiping element 31, 32 to perform a translational movement 230, 231, 232, 233 relative to the surface 20 to be cleaned, which can thus be cleaned.

The wiping element 31, 32 is particularly elastic. In combination with the effect of the damping means 152, it is possible to achieve that a rotational movement 250 is not linearly transferred to the pairwise translational movements 230, 231, 232, 233 of the first part of the wiping element 31 and the second part of the wiping element 32.

In other words it is achieved that the translational movements 231, 232 of the first part of the wiping element 31 do not have to be of the same size and in any case do not show the same course.

This also applies to the second part of the wiping element 32 and the respective translation movements 230, 233.

This ensures that the entire surface 20 of the surface to be cleaned 20 can be reached and cleaned with the wiping element31, 32.

## Claims

1. Surface cleaning apparatus (10) for cleaning a surface (20) of a sensor (15), wherein the surface cleaning apparatus (10) exhibits
- a wiping element (30) being adapted to be brought into contact with the surface (20),
- a first support element (110) being adapted to support the wiping element (30),
- a second support element (120) being adapted to support the wiping element (30), and
- moving means (150) operatively associated with the wiping element (30) and being adapted to move the wiping element (30),
wherein the first support element (110) is adapted to guide the wiping element (30) in a translational movement (210, 211, 212, 220, 230, 231, 232, 233) relative to the surface,
wherein the second support element (120) is adapted to guide the wiping element (30) in a translational movement (210, 211, 212, 220, 230, 231, 232, 233) relative to the surface, wherein
- the surface cleaning apparatus (10) exhibits a third support element (130) being adapted to support the wiping element (30),
- wherein the third support element (130) is adapted to guide the wiping element (30) in a translational movement (210, 211, 212, 220, 230, 231, 232, 233) relative to the surface,
- the surface cleaning apparatus (10) exhibits a fourth support element (140) being adapted to support the wiping element (30),
- wherein the fourth support element (140) is adapted to guide the wiping element (30) in a translational movement (210, 211, 212, 220, 230, 231, 232, 233) relative to the surface,
- **characterised in that** the wiping element is guided in a translational movement relative to the surface (20) through the first, second, third and fourth support
elements (110, 120, 130, 140).

2. Surface cleaning apparatus (10) according to claim 1, **characterised in that** the wiping element (30) exhibits a wire (40).

3. Surface cleaning apparatus (10) according to claim 1 or 2, **characterised in that** at least a part of the wiping element (30) is made of a silicone elastomer (50).

4. Surface cleaning apparatus (10) according to one of the claims 1 to 3, **characterised in that** the wiping element (30) is adapted to be soaked in a cleaning agent (300).

5. Surface cleaning apparatus (10) according to one of the claims 1 to 4, **characterised in that** the wiping element (30) is transparent.

6. Surface cleaning apparatus (10) according to one of the claims 1 to 5, **characterised in that** the wiping element (30) exhibits a transverse extension (34) of 0.1 mm to 3 mm, preferably of 0.2 mm to 2 mm and particularly preferably of 0.3 mm to 1 mm.

7. Surface cleaning apparatus (10) according to one of the claims 1 to 6, **characterised in that** the wiping element (30) consists of several parts (31, 32).

8. Surface cleaning apparatus (10) according to claim 7, **characterised in that**
- the wiping element (30) exhibits a first part (31) and a second part (32),
- wherein the first part (31) and the second part (32) intersect each other.

9. Surface cleaning apparatus (10) according to claim 7, **characterised in that**
- the wiping element (30) exhibits a first part (31) and a second part (32),
- wherein the first part (31) and the second part (32) exhibit a mutual twist.

10. Surface cleaning apparatus (10) according to one of the claims 1 to 9, **characterised in that** the surface cleaning apparatus (10) exhibits shedding means (310) adapted to shed deposits from the wiping element (30).

11. Surface cleaning apparatus (10) according to one of the claims 1 to 10, **characterised in that**
- the wiping element (30) or a part of the wiping element (30) is guided by at least one support element (110, 120, 130, 140), and
- the at least one support element (110, 120, 130, 140) is adapted to clean the wiping element (30) as it passes through the support element (110, 120, 130, 140).

12. Surface cleaning apparatus (10) according to one of the claims 1 to 11, **characterised in that**
- the wiping element (30) or at least one part of the wiping element (31, 32) is guided by at least one support element (110, 120, 130, 140), and
- the at least one support element (110, 120, 130, 140) is adapted to provide cleaning agent (300) to the wiping element (30) as it passes through the support element (110, 120, 130, 140).

13. Surface cleaning apparatus (10) according to one of the claims 1 to 12, **characterised in that** the wiping element (30) is adapted to pass through a reservoir (301) for cleaning agent (300) during movement through the moving means (150).

14. Surface cleaning apparatus (10) according to one of the claims 1 to 13, **characterised in that** the surface cleaning apparatus (10) is adapted to replace a segment of the wiping element (30) being adapted to be brought into contact with the surface (20).

15. Surface cleaning apparatus (10) according to one of the claims 1 to 14, **characterised in that** the moving means (150) exhibit an electric motor (151).

16. Sensor (15) comprising a surface cleaning apparatus (10) according to one of the claims 1 to 15.

17. Vehicle comprising a sensor (15) according to claim 16.

## Patentansprüche

1. Oberflächenreinigungsvorrichtung (10) zum Reinigen einer Oberfläche (20) eines Sensors (15), wobei die Oberflächenreinigungsvorrichtung (10) Folgendes aufweist:
- ein Wischelement (30), das angepasst ist, um mit der Oberfläche (20) in Berührung gebracht zu werden,
- ein erstes Tragelement (110), das angepasst ist, um das Wischelement (30) zu tragen,
- ein zweites Tragelement (120), das angepasst ist, um das Wischelement (30) zu tragen, und
- Bewegungsmittel (150), die mit dem Wischelement (30) wirkverknüpft und angepasst sind, um das Wischelement (30) zu bewegen,
wobei das erste Tragelement (110) angepasst ist, um das Wischelement (30) in einer Verschiebungsbewegung (210, 211, 212, 220, 230, 231, 232, 233) relativ zu der Oberfläche zu führen,
wobei das zweite Tragelement (120) angepasst ist, um das Wischelement (30) in einer Verschiebungsbewegung (210, 211, 212, 220, 230, 231, 232, 233) relativ zu der Oberfläche zu führen, wobei
- die Oberflächenreinigungsvorrichtung (10) ein drittes Tragelement (130) aufweist, das angepasst ist, um das Wischelement (30) zu tragen,
- wobei das dritte Tragelement (130) angepasst ist, um das Wischelement (30) in einer Verschiebungsbewegung (210, 211, 212, 220, 230, 231, 232, 233) relativ zu der Oberfläche zu führen,
- die Oberflächenreinigungsvorrichtung (10) ein viertes Tragelement (140) aufweist, das angepasst ist, um das Wischelement (30) zu tragen,
- wobei das vierte Tragelement (140) angepasst ist, um das Wischelement (30) in einer Verschiebungsbewegung (210, 211, 212, 220, 230, 231, 232, 233) relativ zu der Oberfläche zu führen,
- **dadurch gekennzeichnet, dass** das Wischelement in einer Verschiebungsbewegung relativ zu der Oberfläche (20) durch das erste, das zweite, das dritte und das vierte
Tragelement(110, 120, 130, 140) geführt wird.

2. Oberflächenreinigungsvorrichtung (10) nach Anspruch 1, **dadurch gekennzeichnet, dass** das Wischelement (30) einen Draht (40) aufweist.

3. Oberflächenreinigungsvorrichtung (10) nach Anspruch 1 oder 2, **dadurch gekennzeichnet, dass** wenigstens ein Teil des Wischelements (30) aus einem Silikonelastomer (50) hergestellt ist.

4. Oberflächenreinigungsvorrichtung (10) nach einem der Ansprüche 1 bis 3, **dadurch gekennzeichnet, dass** das Wischelement (30) angepasst ist, um mit einem Reinigungsmittel (300) durchtränkt zu werden.

5. Oberflächenreinigungsvorrichtung (10) nach einem der Ansprüche 1 bis 4, **dadurch gekennzeichnet, dass** das Wischelement (30) transparent ist.

6. Oberflächenreinigungsvorrichtung (10) nach einem der Ansprüche 1 bis 5, **dadurch gekennzeichnet, dass** das Wischelement (30) eine Quererstreckung (34) von 0,1 mm bis 3 mm, bevorzugt von 0,2 mm bis 2 mm und insbesondere bevorzugt von 0,3 mm bis 1 mm aufweist.

7. Oberflächenreinigungsvorrichtung (10) nach einem der Ansprüche 1 bis 6, **dadurch gekennzeichnet, dass** das Wischelement (30) aus mehreren Teilen (31, 32) besteht.

8. Oberflächenreinigungsvorrichtung (10) nach Anspruch 7, **dadurch gekennzeichnet, dass**
- das Wischelement (30) einen ersten Teil (31) und einen zweiten Teil (32) aufweist,
- wobei sich der erste Teil (31) und der zweite Teil (32) überschneiden.

9. Oberflächenreinigungsvorrichtung (10) nach Anspruch 7, **dadurch gekennzeichnet, dass**
- das Wischelement (30) einen ersten Teil (31) und einen zweiten Teil (32) aufweist,
- wobei der erste Teil (31) und der zweite Teil (32) eine gegenseitige Verdrehung aufweisen.

10. Oberflächenreinigungsvorrichtung (10) nach einem der Ansprüche 1 bis 9, **dadurch gekennzeichnet, dass** die Oberflächenreinigungsvorrichtung (10) Ablösemittel (310) aufweist, die angepasst sind, um Ablagerungen von dem Wischelement (30) abzulösen.

11. Oberflächenreinigungsvorrichtung (10) nach einem der Ansprüche 1 bis 10, **dadurch gekennzeichnet, dass**
- das Wischelement (30) oder ein Teil des Wischelements (30) durch wenigstens ein Tragelement (110, 120, 130, 140) geführt wird, und
- das wenigstens eine Tragelement (110, 120, 130, 140) angepasst ist, um das Wischelement (30) zu reinigen, wenn es das Tragelement (110, 120, 130, 140) durchläuft.

12. Oberflächenreinigungsvorrichtung (10) nach einem der Ansprüche 1 bis 11, **dadurch gekennzeichnet, dass**
- das Wischelement (30) oder wenigstens ein Teil des Wischelements (31, 32) durch wenigstens ein Tragelement (110, 120, 130, 140) geführt wird, und
- das wenigstens eine Tragelement (110, 120, 130, 140) angepasst ist, um dem Wischelement (30) Reinigungsmittel (300) bereitzustellen, wenn es das Tragelement (110, 120, 130, 140) durchläuft.

13. Oberflächenreinigungsvorrichtung (10) nach einem der Ansprüche 1 bis 12, **dadurch gekennzeichnet, dass** das Wischelement (30) angepasst ist, um während einer Bewegung durch die Bewegungsmittel (150) einen Vorratsbehälter (301) für Reinigungsmittel (300) zu durchlaufen.

14. Oberflächenreinigungsvorrichtung (10) nach einem der Ansprüche 1 bis 13, **dadurch gekennzeichnet, dass** die Oberflächenreinigungsvorrichtung (10) angepasst ist, um ein Segment des Wischelements (30) zu ersetzen, das angepasst ist, um mit der Oberfläche (20) in Berührung gebracht zu werden.

15. Oberflächenreinigungsvorrichtung (10) nach einem der Ansprüche 1 bis 14, **dadurch gekennzeichnet, dass** die Bewegungsmittel (150) einen Elektromotor (151) aufweisen.

16. Sensor (15), der eine Oberflächenreinigungsvorrichtung (10) nach einem der Ansprüche 1 bis 15 umfasst.

17. Fahrzeug, das einen Sensor (15) nach Anspruch 16 umfasst.

## Revendications

1. Appareil de nettoyage de surface (10) pour nettoyer une surface (20) d'un capteur (15), dans lequel l'appareil de nettoyage de surface (10) présente
- un élément d'essuyage (30) étant conçu pour être mis en contact avec la surface (20),
- un premier élément de support (110) étant conçu pour supporter l'élément d'essuyage (30),
- un deuxième élément de support (120) étant conçu pour supporter l'élément d'essuyage (30), et
- des moyens de déplacement (150) associés de manière fonctionnelle à l'élément d'essuyage (30) et étant conçu pour déplacer l'élément d'essuyage (30),
dans lequel le premier élément de support (110) est conçu pour guider l'élément d'essuyage (30) dans un mouvement de translation (210, 211, 212, 220, 230, 231, 232, 233) par rapport à la surface,
dans lequel le deuxième élément de support (120) est conçu pour guider l'élément d'essuyage (30) dans un mouvement de translation (210, 211, 212, 220, 230, 231, 232, 233) par rapport à la surface, dans lequel
- l'appareil de nettoyage de surface (10) présente un troisième élément de support (130) conçu pour supporter l'élément d'essuyage (30),
- dans lequel le troisième élément de support (130) est conçu pour guider l'élément d'essuyage (30) dans un mouvement de translation (210, 211, 212, 220, 230, 231, 232, 233) par rapport à la surface,
- l'appareil de nettoyage de surface (10) présente un quatrième élément de support (140) conçu pour supporter l'élément d'essuyage (30),
- dans lequel le quatrième élément de support (140) est conçu pour guider l'élément d'essuyage (30) dans un mouvement de translation (210, 211, 212, 220, 230, 231, 232, 233) par rapport à la surface,
- **caractérisé en ce que** l'élément d'essuyage est guidé dans un mouvement de translation par rapport à la surface (20) à travers les premier, deuxième, troisième et quatrième éléments
de support (110, 120, 130, 140).

2. Appareil de nettoyage de surface (10) selon la revendication 1, **caractérisé en ce que** l'élément d'essuyage (30) présente un fil (40).

3. Appareil de nettoyage de surface (10) selon la revendication 1 ou 2, **caractérisé en ce qu'**au moins une partie de l'élément d'essuyage (30) est en élastomère de silicone (50).

4. Appareil de nettoyage de surface (10) selon l'une des revendications 1 à 3, **caractérisé en ce que** l'élément d'essuyage (30) est conçu pour être imbibé d'un agent de nettoyage (300).

5. Appareil de nettoyage de surface (10) selon l'une des revendications 1 à 4, **caractérisé en ce que** l'élément d'essuyage (30) est transparent.

6. Appareil de nettoyage de surface (10) selon l'une des revendications 1 à 5, **caractérisé en ce que** l'élément d'essuyage (30) présente une extension transversale (34) de 0,1 mm à 3 mm, de préférence de 0,2 mm à 2 mm et particulièrement de préférence de 0,3 mm à 1 mm.

7. Appareil de nettoyage de surface (10) selon l'une des revendications 1 à 6, **caractérisé en ce que** l'élément d'essuyage (30) est constitué de plusieurs parties (31, 32).

8. Appareil de nettoyage de surface (10) selon la revendication 7, **caractérisé en ce que**
- l'élément d'essuyage (30) présente une première partie (31) et une seconde partie (32),
- dans lequel la première partie (31) et la seconde partie (32) se croisent.

9. Appareil de nettoyage de surface (10) selon la revendication 7, **caractérisé en ce que**
- l'élément d'essuyage (30) présente une première partie (31) et une seconde partie (32),
- dans lequel la première partie (31) et la seconde partie (32) présentent une torsion mutuelle.

10. Appareil de nettoyage de surface (10) selon l'une des revendications 1 à 9, **caractérisé en ce que** l'appareil de nettoyage de surface (10) présente des moyens d'élimination (310) conçus pour éliminer les dépôts de l'élément d'essuyage (30).

11. Appareil de nettoyage de surface (10) selon l'une des revendications 1 à 10, **caractérisé en ce que**
- l'élément d'essuyage (30) ou une partie de l'élément d'essuyage (30) est guidé par au moins un élément de support (110, 120, 130, 140), et
- l'au moins un élément de support (110, 120, 130, 140) est conçu pour nettoyer l'élément d'essuyage (30) lorsqu'il passe à travers l'élément de support (110, 120, 130, 140).

12. Appareil de nettoyage de surface (10) selon l'une des revendications 1 à 11, **caractérisé en ce que**
- l'élément d'essuyage (30) ou au moins une partie de l'élément d'essuyage (31, 32) est guidé par au moins un élément de support (110, 120, 130, 140), et
- l'au moins un élément de support (110, 120, 130, 140) est conçu pour fournir un agent de nettoyage (300) à l'élément d'essuyage (30) lorsqu'il passe à travers l'élément de support (110, 120, 130, 140).

13. Appareil de nettoyage de surface (10) selon l'une des revendications 1 à 12, **caractérisé en ce que** l'élément d'essuyage (30) est conçu pour passer à travers d'un réservoir (301) pour agent de nettoyage (300) lors du déplacement à travers les moyens de déplacement (150).

14. Appareil de nettoyage de surface (10) selon l'une des revendications 1 à 13, **caractérisé en ce que** l'appareil de nettoyage de surface (10) est conçu pour remplacer un segment de l'élément d'essuyage (30) étant conçu pour être mis en contact avec la surface (20).

15. Appareil de nettoyage de surface (10) selon l'une des revendications 1 à 14, **caractérisé en ce que** les moyens de déplacement (150) présentent un moteur électrique (151).

16. Capteur (15) comprenant un appareil de nettoyage de surface (10) selon l'une des revendications 1 à 15.

17. Véhicule comprenant un capteur (15) selon la revendication 16.
